Europäisches Patentamt

European Patent Office

Office européen des brevets

(11) Veröffentlichungsnummer: **0 240 783 B1**

# EUROPÄISCHE PATENTSCHRIFT

(45) Veröffentlichungstag der Patentschrift: **27.02.91**

(51) Int. Cl.5. **H02H 3/04, G01R 31/02**

(21) Anmeldenummer: **87103875.8**

(22) Anmeldetag: **17.03.87**

(54) **Ansprechzähler für einen Überspannungsableiter.**

(30) Priorität: 09.04.86 CH 1391/86

(43) Veröffentlichungstag der Anmeldung:
14.10.87 Patentblatt 87/42

(45) Bekanntmachung des Hinweises auf die
Patenterteilung:
27.02.91 Patentblatt 91/09

(84) Benannte Vertragsstaaten:
**CH DE FR GB IT LI SE**

(56) Entgegenhaltungen:
EP-A- 0 190 547
DE-A- 1 588 142
FR-A- 2 374 783

(73) Patentinhaber: **BBC Brown Boveri AG**
**Haselstrasse**
**CH-5401 Baden(CH)**

(72) Erfinder: **Brunner, Kurt**
**Alt-Ferracherstrasse 35**
**CH-8630 Rüti(CH)**
Erfinder: **Fischer, Rudolf**
**Neeracherstrasse 12**
**CH-8173 Riedt bei Neerach(CH)**
Erfinder: **Giese, Klaus**
**Kappelstrasse 7**
**CH-5432 Neuenhof(CH)**

## Beschreibung

Bei der Erfindung wird ausgegangen von einer Vorrichtung zum Zählen der von einem funkenstreckenlosen Ueberspannungsableiter abgeleiteten Ueberspannungsstösse nach dem ersten Teil von Patentanspruch 1.

Ein solcher Ansprechzähler ist im Artikel von Breder et al. "Supervision of Gapless Zinc-Oxide Surge Arresters" Conference on Lightning + Power Systems London 1984 (Conference Publication No. 236, IEE) veröffentlicht worden. Bei dem in diesem Artikel beschriebenen funkenstreckenlosen Ueberspannungsableiter werden Ueberspannungsstösse mit einem Messkopf erfasst, welcher den in einer Erdrückleitung des Ueberspannungsableiters geführten Ableitstrom detektiert. Dem Messkopf ist ein Zählwerk nachgeschaltet, welches einen die Anzahl der Ueberspannungsstösse registrierenden Zähler enthält sowie einen dem Zähler vorgeschalteten Schalter. Dieser Schalter stellt oberhalb eines Schwellwertes des Ableitstromes kurzzeitig eine Wirkverbindung zwischen dem Messkopf und dem Zähler her. Hierdurch kann jeder Ueberspannungsstoss exakt erfasst werden. Die hierbei verwendeten Zeitglieder sind jedoch vergleichsweise aufwendig und weisen eine vom Zeitverlauf des Ableitstromes abhängige Totzeit auf.

Der Erfindung, wie sie in den Ansprüchen gekennzeichnet ist, liegt die Aufgabe zugrunde, eine Vorrichtung zum Zählen der von einem funkenstreckenlosen Ueberspannungsableiter abgeleiteten Ueberspannungsstösse zu schaffen, welche sich bei hoher Zählgenauigkeit durch eine von den verwendeten Bauelementen unabhängige Totzeit auszeichnet.

Die Zählvorrichtung nach der Erfindung zeichnet sich durch eine hohe Empfindlichkeit aus, da sie als aktiver Zähler ausgebildet ist und dem gemessenen Signal des Ableitstroms nahezu keine Energie entnimmt. Die in ihr verwendete aktive Elektronik ermöglicht eine genau einstellbare und reproduzierbare Totzeit, so dass gesamthaft gesehen eine hohe Zählgenauigkeit erreicht wird.

Nachfolgend ist ein Ausführungsbeispiel der Erfindung anhand der Zeichnung dargestellt.

Hierbei zeigt:

Fig. 1 den prinzipiellen Aufbau und die prinzipielle Anordnung einer Vorrichtung zum Zählen der von einem funkenstreckenlosen Ueberspannungsableiter abgeleiteten Ueberspannungsstösse nach der Erfindung,

Fig. 2 ein Blockschaltbild einer Ausführungsform der Vorrichtung gemäss Fig. 1, und

Fig. 3 den zeitlichen Verlauf von Signalen, welche beim Ableiten eines Ueberspannungsstosses von der Vorrichtung gemäss Fig. 1 erfasst oder gebildet werden.

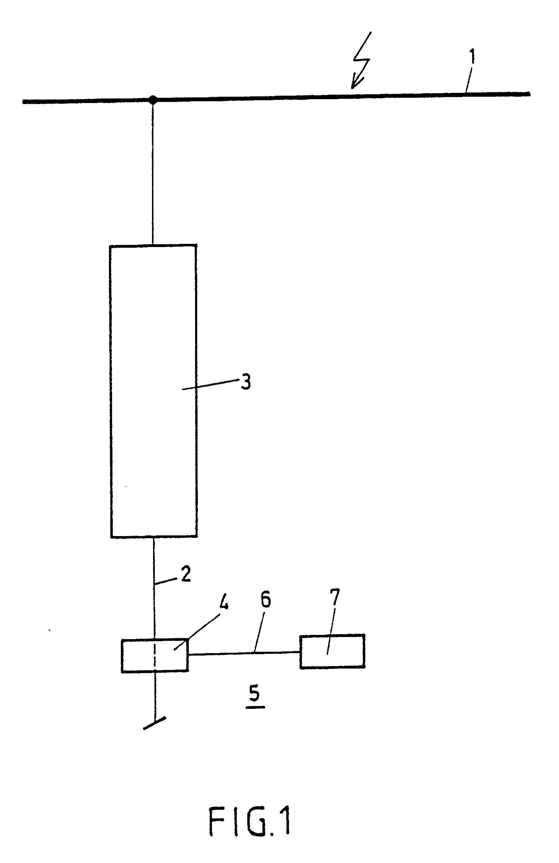

In Fig. 1 bezeichnet 1 eine Hochspannungs- und 2 eine Erdrückleitung, zwischen welchen Leitungen ein funkenstreckenloser und vorzugsweise aus einem Stapel von nichtlinearen Metalloxid-Widerständen aufgebauter Ueberspannungsableiter 3 geschaltet ist. Die Erdrückleitung 2 ist von einem Messkopf 4 einer Vorrichtung 5 zum Zählen der vom funkenstreckenlosen Ueberspannungsableiter 3 abgeleiteten Ueberspannungsstösse umgeben. Der Messkopf 4 wirkt über eine vorzugsweise als Lichtleiter 6 ausgebildete Signalleitung auf ein Zählwerk 7.

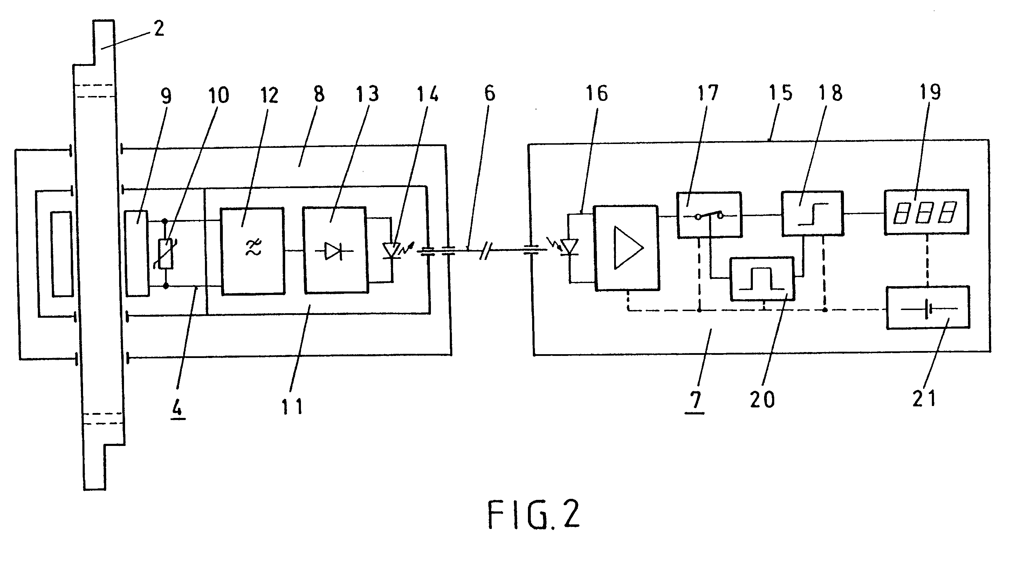

Wie aus Fig. 2 zu ersehen ist, befindet sich der Messkopf 4 in einem elektromagnetisch dichten und vorzugsweise aus mehreren Schalen bestehenden Gehäuse 8. Der Messkopf 4 enthält ein beispielsweise als induktiver Wandler 9 ausgeführtes und von einem Ueberlastschutz 10 abgesichertes Messorgan, dessen Ausgangssignal in ein im Gehäuse 8 enthaltenes und zusätzlich elektromagnetisch abgeschirmtes Teilgehäuse 11 geführt ist. Im Teilgehäuse 11 ist es über ein Filterelement 12 und einen Gleichrichter 13 an einen vorzugsweise als Leuchtdiode 14 ausgebildeten elektro-optischen Wandler gelegt.

Das in der Leuchtdiode 14 gebildete optische Signal gelangt über den Lichtleiter 6 in ein ebenfalls als elektromagnetische Abschirmung wirkendes und das Zählwerk 7 aufnehmendes Gehäuse 15. Dort wird das optische Signal in einem opto-elektrischen Wandler 16 in ein elektrisches Signal umgewandelt. Dieses Signal gelangt über einen steuerbaren und normalerweise geschlossenen Schalter 17 an einen Schwellwertdetektor 18, dessen pulsförmiges Ausgangssignal einerseits von einem Zähler 19 registriert wird und andererseits auf ein vorzugsweise als monostabile Kippstufe, etwa als Monoflop 20, ausgebildetes Steuerelement wirkt. Das Steuerelement seinerseits wirkt auf ein Steuerorgan des Schalters 17. Elektro-optischer Wandler 16, Schalter 17, Schwellwertdetektor 18, Zähler 19 und Monoflop 20 werden von einer vorzugsweise als Batterie 21 auf der Basis von Lithium ausgebildeten Spannungsquelle mit Energie versorgt und sind zum Schutz gegen Umwelteinflüsse in eine Kunststoffmasse eingegossen. Elektro-optischer Wandler 16, Schalter 17, Schwellwertdetektor 18, Zähler 19 und Monoflop 20 sind auf sehr kleine Ruheströme ausgelegt und belasten die Batterie 21 lediglich während eines Messvorganges.

Anstelle einer aus elektro-optischem Wandler, Lichtleiter und opto-elektrischem Wandler bestehenden Uebertragungseinheit kann auch ein integrierter Optokoppler verwendet werden. Dies ist besonders dann vorteilhaft, wenn die Erdrückleitung 2 leicht zugänglich ist. Messkopf und Zählwerk können dann leicht in einem einzigen Gehäuse eingebaut sein. Hingegen empfiehlt es sich, einen Lichtleiter zu verwenden, wenn die Erdrückleitung schwer zugänglich ist. Dies kann bei metallgekapselten gasisolierten Ueberspannungsableitern auftreten, welche auf dem Kopf stehend montiert sind. Der Erdrückleiter befindet sich in einem solchen Fall in einer Höhe von 5 bis 10 Metern über dem Boden. Um bei einem solchen Ueberspannungsableiter eine bequeme Ablesung des Ansprechzählers zu ermöglichen, stellt der Lichtleiter 6 eine geeignete Möglichkeit dar. Das am Messkopf ermittelte Signal des Ableitstroms kann frei von elektromagnetischen Störungen zu einem entfernten Ort, etwa einem Kommandoraum, geführt werden.

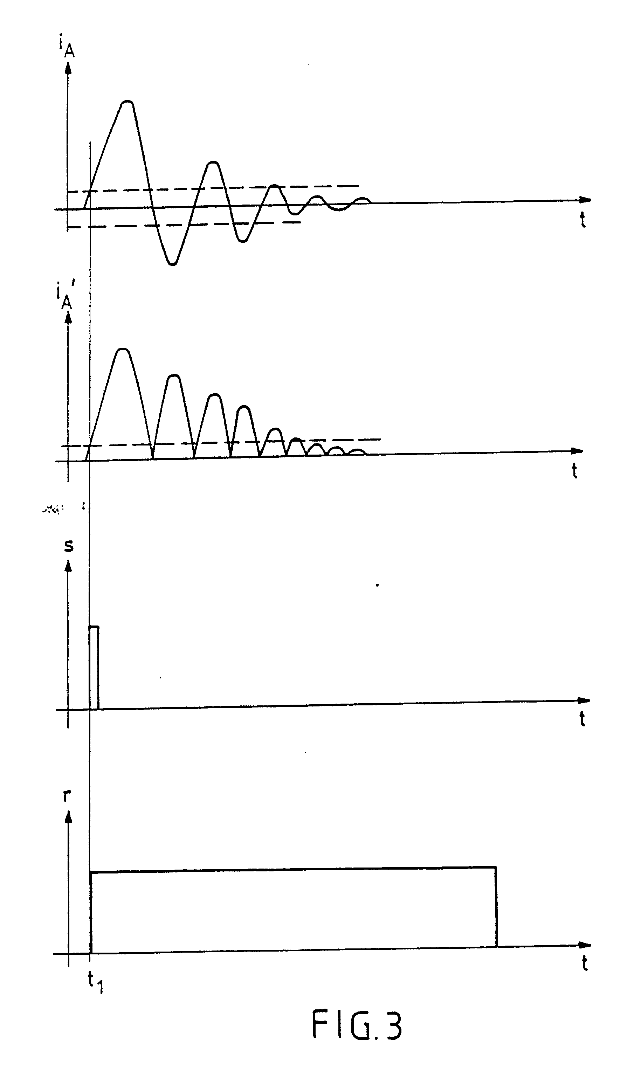

Die Wirkungsweise der in den Figuren 1 und 2 dargestellten Vorrichtung ist nun wie folgt:
Tritt auf der in Fig. 1 dargestellten und vom Ueber-spannungsableiter geschützten Hochspannungslei-tung 1 ein (in der Figur durch einen gezackten Pfeil dargestellter) Ueberspannungsstoss auf, so wird vom Ueberspannungsableiter 3 ein durch die Erdrückleitung 2 abgeführter Ableitstrom $i_A$ gebildet, dessen Abhängigkeit in Funktion der Zeit t in Fig. 3 dargestellt ist. Typischerweise schwingt ein solcher Ableitstrom kurzzeitig mit einer von der Hochspannungsleitung 1 abhängigen Frequenz, so dass aus einem einzigen Ueberspannungsstoss mehrere rasch aufeinanderfolgende Stossströme resultieren können.

Der vom Messkopf 4 erfasste und aus mehreren Stossströmen bestehende Ableitstrom $i_A$ wird im Messkopf 4 in ein optisches Signal $i_A'$ umgewan-delt, dessen Zeitabhängigkeit ebenfalls in Fig. 3 dargestellt ist.

Ueberschreitet nun der Ableitstrom $i_A$ an einem Zeitpunkt $t_1$ einen in Fig. 3 gestrichelt eingezeichneten Schwellwert, so überschreitet auch das opti-sche Signal $i_A'$ einen in Fig. 3 gestrichelt eingezeichneten Grenzwert und entsprechend auch das auf den Schwellwertdetektor 18 wirkende und aus dem optischen Signal zurückverwandelte elektrische Signal. Der Schwellwertdetektor 18 gibt zum Zeitpunt $t_1$ das in Fig. 3 dargestellte Signal s ab, welches den Zähler 19 zum Weiterzählen veranlasst. Gleichzeitig wirkt der Schwellwertdetektor 18 auf das Monoflop 20. Das Monoflop 20 gibt eben-falls zum Zeitpunkt $t_1$ ein (in Fig. 3 mit r bezeichnetes) Signal ab, welches auf ein Steuerorgan des Schalters 17 wirkt und den Schalter 17 öffnet. Die Zeitdauer des vom Monoflop 20 abgegebenen Signals ist vergleichsweise gross und hält den Schalter 17 so lange offen bis der Ableitstrom $i_A$ weitgehend abgeklungen ist. Hierdurch wird in einfacher Weise vermieden, dass die innerhalb eines einzi-gen Ueberspannungsstosses vom Ueberspan-nungsableiter gebildeten Stromstösse getrennt ge-zählt werden.

## Ansprüche

1. Vorrichtung zum Zählen der von einem funken-streckenlosen Ueberspannungsableiter (3) ab-geleiteten Ueberspannungsstösse mit einem Messkopf (4) zum Erfassen des beim Auftreten eines Ueberspannungsstosses vom Ueberspannungsableiter (3) in einer Erdrückleitung (2) geführten Ableitstroms und mit einem dem Messkopf (4) nachgeschalteten Zählwerk (7), enthaltend einen die Anzahl der Ueberspannungsstösse registrierenden Zähler (19) sowie einen dem Zähler (19) vorgeschalteten Schalter (17), welcher oberhalb eines Schwellwertes des Ableitstroms kurzzeitig eine Wirkverbindung zwischen Messkopf (4) und Zähler (19) herstellt, dadurch gekennzeichnet, dass dem Schalter (17) ein oberhalb des Schwellwertes des Ableitstroms ansprechender Schwellwertdetektor (18) nachgeschaltet ist, welcher sowohl auf den Zähler wirkt als auch auf ein Steuerelement, welches den Schalter (17) nach dem Ansprechen des Schwellwertdetektors (18) ausschaltet und während einer vorgege-nen und im wesentlichen durch die Dauer des Ueberspannungsstosses bestimmte Zeitspanne in der Ausschaltposition hält.

2. Vorrichtung nach Anspruch 1, dadurch gekenn-zeichnet, dass Schalter (17), Schwellwertdetek-tor (18) und Steuerglied als aktive elektrische Bauteile ausgebildet sind und von einer vorzugsweise als Batterie (21) ausgebildeten Spannungsquelle mit elektrischer Energie versorgt sind.

3. Vorrichtung nach Anspruch 2, dadurch gekennzeichnet, dass das Steuerglied als monostabile Kippstufe, insbesondere als Monoflop (20) und der Schalter (17) als Halbleiterschalter, insbesondere als Transistor, ausgeführt sind.

4. Vorrichtung nach Anspruch 3, dadurch gekennzeichnet, dass die elektronischen Bauteile des Zählwerks (7) in einer Kunststoffmasse vergossen sind.

5. Vorrichtung nach einem der Ansprüche 1 bis 4, dadurch gekennzeichnet, dass das Zählwerk (7) in einem elektromagnetisch abgeschirmten Gehäuse (15) untergebracht ist.

6. Vorrichtung nach einem der Ansprüche 1 bis 5, dadurch gekennzeichnet, dass der Messkopf (4) über einen Lichtleiter auf das Zählwerk (7) wirkt.

7. Vorrichtung nach einem der Ansprüche 1 bis 5. dadurch gekennzeichnet, dass der Messkopf (4) und das Zählwerk (7) in einem gemeinsamen Gehäuse untergebracht sind.

8. Vorrichtung nach einem der Ansprüche 1 bis 7, dadurch gekennzeichnet, dass der Messkopf (4) in einem elektromagnetisch abgeschirmten Gehäuse (8) untergebracht ist.

**Claims**

1. Device for counting the overvoltage surges discharged by a gapless overvoltage arrester (3) comprising a sensing head (4) for detecting the discharge current carried by the overvoltage arrester (3) in a ground return line (2) during the occurrence of an overvoltage surge, and comprising a counting mechanism (7) which follows the sensing head (4), containing a counter (19) which records the number of overvoltage surges and a switch (17) which precedes the counter (19) and which, above a threshold value of the discharge current, establishes for a brief time an effective connection between sensing head (4) and counter (19), characterized in that the switch (17) is followed by a threshold detector (18) which responds above the threshold value of the discharge current and which acts both on the counter and on a control element which switches the switch (17) off after the threshold detector (18) has responded and holds it in the switched-off position during a predetermined period which is essentially determined by the duration of the overvoltage surge.

2. Device according to Claim 1, characterized in that switch (17), threshold detector (18) and control section are constructed as active electric components and are supplied with electrical energy by a voltage source which is preferably constructed as a battery (21).

3. Device according to Claim 2, characterized in that the control section is constructed as monostable multivibrator, particularly as monostable flipflop (20) and the switch (17) is constructed as semiconductor switch, particularly as transistor.

4. Device according to Claim 3, characterized in that the electronic components of the counting mechanism (7) are cast in a compound of synthetic material.

5. Device according to one of Claims 1 to 4, characterized in that the counting mechanism (7) is accommodated in an electromagnetically shielded housing (15).

6. Device according to one of Claims 1 to 5, characterized in that the sensing head (4) acts on the counting mechanism (7) via an optical conductor.

7. Device according to one of Claims 1 to 5, characterized in that the sensing head (4) and the counting mechanism (7) are accommodated in a common housing.

8. Device according to one of Claims 1 to 7, characterized in that the sensing head (4) is accommodated in an electromagnetically shielded housing (8).

**Revendications**

1. Dispositif servant à compter les surtensions transitoires dérivées par un parafoudre (3) sans éclateurs, qui comporte une tête de mesure (4) destinée à détecter le courant de fuite amené, par le parafoudre (3), dans une ligne de retour par la terre (2), lors de l'apparition d'une surtension transitoire, ainsi qu'un dispositif de comptage (7), monté en aval de la tête de mesure (4), qui contient un compteur (19) enregistrant le nombre de surtensions transitoires, et un interrupteur (17), monté en amont du compteur (19), qui établit, pendant un court laps de temps, une liaison active entre la tête de mesure (4) et le compteur (19) lorsque le courant de fuite excède une valeur de seuil, caractérisé en ce que l'interrupteur (17) est suivi d'un détecteur de valeur de seuil (18) qui intervient lorsque le courant de fuite atteint une valeur supérieure à la valeur de seuil et qui agit à la fois sur le compteur et sur un élément de commande qui ouvre l'interrupteur (17) après l'interruption du détecteur de valeur de seuil (18) et le maintient dans la position ouverte pendant un laps de temps déterminé en substance par la durée de la surtension transitoire.

2. Dispositif suivant la revendication 1, caractérisé en ce que l'interrupteur (17), le détecteur de valeur de seuil (18) et l'élément de commande sont réalisés sous forme de composants électriques actifs et sont alimentés en énergie électrique par une source de tension ayant, de préférence, la forme d'une pile (21).

3. Dispositif suivant la revendication 2, caractérisé en ce que l'élément de commande a la forme d'une bascule monostable, en particulier d'un monovibrateur (20), et l'interrupteur (17) a la forme d'un interrupteur à semi-conducteurs, en particulier d'un transistor.

4. Dispositif suivant la revendication 3, caractérisé en ce que les composants électroniques du dispositif de comptage (7) sont encapsulés dans une masse de matière plastique.

5. Dispositif suivant l'une quelconque des revendications 1 à 4, caractérisé en ce que le dispositif de comptage (7) est logé dans un boîtier (15) à blindage électromagnétique.

6. Dispositif suivant l'une quelconque des revendications 1 à 5, caractérisé en ce que la tête de mesure (4) agit sur le dispositif de comptage (7) par l'intermédiaire d'un conduit de lumière.

7. Dispositif suivant l'une quelconque des revendications 1 à 5, caractérisé en ce que la tête de mesure (4) et le dispositif de comptage (7) sont logés dans un boîtier commun.

8. Dispositif suivant l'une quelconque des revendications 1 à 7, caractérisé en ce que la tête de mesure (4) est logée dans un boîtier (8) à blindage électromagnétique.

FIG.1

FIG.2

FIG.3